# FASCICULE DE BREVET EUROPEEN

(11) **EP 0 388 317 B1**
(45) Date de publication et mention de la délivrance du brevet: **31.03.1993**
(21) Numéro de dépôt: 90400728.3
(22) Date de dépôt: 16.03.1990
(51) Int. Cl.: G01V 3/06, G01V 3/26

(54) **Procédé et dispositif pour localiser un puits muni d'un tubage métallique à partir d'un autre puits**
Verfahren und Anlage für das Lokalisieren eines Bohrlochs mit Metallwand von einem anderen Bohrloch aus
Process and device for localising a well with metallic casing from another well

(30) Priorité: 17.03.1989 FR 8903534
(43) Date de publication de la demande: 19.09.1990
(73) Titulaire: SCHLUMBERGER LIMITED, New York, N.Y. 10172 (US); SCHLUMBERGER TECHNOLOGY B.V., NL-2517 KB Den Haag (NL); SCHLUMBERGER HOLDINGS LIMITED, Road Town, Tortola (VG)
(72) Inventeur: Hutin, Rémi, 91140 Bures sur Yvette (FR)
(74) Mandataire: Hagel, Francis

(56) Documents cités:
- US-A- 4 700 142
- US-A- 4 791 373

## Description

La présente invention concerne un procédé et un dispositif pour localiser un puits tubé à partir d'un autre puits, et plus particulièrement pour localiser un puits en éruption à partir d'un puits de secours.

Dans le cas d'une éruption dans un puits, la technique habituelle consiste à obturer le puits à l'aide d'un puits de secours foré à partir d'un point éloigné de la zone d'éruption. Cette technique exige que le puits de secours soit foré dans la direction du puits en éruption, ce qui suppose que cette direction puisse être déterminée à partir du puits de secours.

Différentes méthodes ont été proposées pour localiser un puits en éruption. Pour un exposé de ces techniques, on pourra se référer au brevet US 4 372 398, colonne 1 ligne 55 à colonne 2, ligne 65. Le type de technique auquel se rattache l'invention utilise la présence d'un tubage métallique, donc électriquement conducteur, dans le puits en éruption.

Le brevet US 4 072 200 décrit une méthode de localisation consistant à exciter le tubage du puits-cible à l'aide d'un courant alternatif de manière à créer un champ magnétique autour du tubage, et à détecter ce champ à l'aide d'un capteur placé dans un autre puits. Ce brevet indique qu'une telle méthode n'est pas applicable si le puits-cible est en feu, car il n'est pas possible en pareil cas d'exciter le tubage du puits-cible.

Le brevet US 4 372 398 précité décrit une méthode de ce type dans laquelle l'excitation électrique est réalisée à l'aide d'une électrode descendue dans le puits de secours. Le champ magnétique créé autour du tubage du puits-cible est détecté au moyen de capteurs placés dans le puits de secours, à une distance suffisamment grande de l'électrode pour que les courants circulant dans et autour du puits de secours ne perturbent pas la détection. Cette méthode pèche toutefois par sa portée réduite : la détection du puits-cible n'est guère possible au-delà de quelques dizaines de mètres.

L'invention vise à permettre la détection du tubage d'un puits-cible à partir d'un puits de secours avec une portée sensiblement plus grande.

Le procédé selon l'invention pour localiser un puits-cible muni d'un tubage métallique comprend les étapes consistant à descendre dans un puits de secours foré en direction du puits-cible une électrode et un capteur de champ magnétique, et à injecter dans le sol un courant alternatif à l'aide de cette électrode, et est caractérisé par le fait que l'on détecte au moyen du capteur le champ magnétique créé par les lignes de courant circulant entre l'électrode et le tubage du puits-cible.

La direction du champ magnétique détecté est fonction de la direction des lignes de courant circulant vers le tubage du puits-cible, laquelle dépend elle-même de la direction du puits-cible, vue du puits de secours.

La détection, du fait qu'elle porte sur le champ magnétique créé par des courants partant de l'électrode, concerne un champ induit dans une région voisine du puits de secours. De ce fait, une détection à partir du puits de secours pourra avoir lieu même si le puits-cible en est encore éloigné d'une distance interdisant la détection du champ induit autour du tubage du puits-cible. Ainsi, une détection indicative de la direction du puits-cible peut avoir lieu à partir d'une distance au puits-cible relativement grande. La portée de détection est variable selon les caractéristiques de résistivité des formations géologiques, mais on peut indiquer comme ordre de grandeur une centaine de mètres.

L'invention a également pour objet un dispositif pour la mise en oeuvre du procédé décrit ci-dessus, comprenant des moyens agencés pour être descendus dans un puits de secours foré en direction d'un puits-cible, lesdits moyens comprenant une électrode pour injecter dans le sol un courant alternatif et un capteur de champ magnétique, caractérisé par le fait que la distance entre le capteur et l'électrode est suffisamment faible pour que dans le champ magnétique détecté par le capteur, la composante prépondérante soit créée par les courants circulant dans le sol à partir de l'électrode en direction du tubage du puits-cible.

L'invention est décrite plus en détail ci-après en référence aux dessins annexés, dans lesquels :
- la figure 1 illustre le procédé de localisation selon l'invention,
- la figure 2 montre schématiquement une forme de réalisation du dispositif de détection.

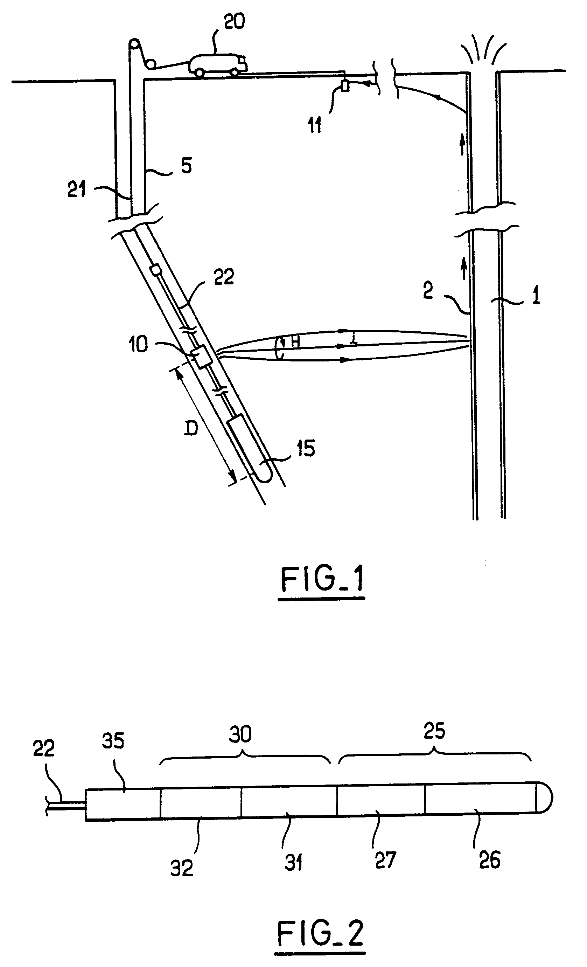

On a représenté à la figure 1 un puits en éruption 1 muni d'un tubage métallique 2. Pour mettre fin à l'éruption, on s'efforce d'obturer le puits en profondeur, et pour cela, il faut forer un puits de secours 5 de manière qu'il rencontre le puits en éruption à la profondeur souhaitée. Pour pouvoir diriger le forage du puits 5 de manière appropriée, il est nécessaire de localiser le puits en éruption à partir du puits de secours.

Le principe de localisation selon l'invention est illustré par la figure 1. On fait circuler un courant alternatif entre une électrode de fond 10 placée dans le puits de secours et une électrode de retour 11 placée en surface. Le tubage métallique, généralement en acier, présente une conductance électrique très supérieure à celle des formations géologiques, et forme un chemin privilégié pour le passage du courant. De ce fait, les lignes de courant partant de l'électrode de fond 10 tendent à se concentrer dans la direction (suivant l'azimut) du tubage du puits en éruption, comme schématisé sur la figure 1, et, en ce qui concerne l'inclinaison par rapport à la verticale, selon la perpendiculaire au tubage 2 - étant supposé que les formations géologiques entre les puits sont homogènes du point de vue électrique. Le passage d'un courant alternatif i induit un champ magnétique variable H dans un plan perpendiculaire au courant, c'est-à-dire perpendiculaire au plan contenant l'électrode 10 et le tubage du puits-cible. Ce champ est détecté au moyen d'un dispositif 15 descendu dans le puits de secours, lequel dispositif comprend un ensemble de magnétométrie sensible aux composantes du champ magnétique respectivement selon les axes X, Y, Z mutuellement orthogonaux.

La mesure des trois composantes du champ alternatif H permet de déterminer le plan dans lequel se situe le champ et donc la direction du tubage du puits-cible, celle-ci étant perpendiculaire au plan précité.

Si le puits de secours, dans la section où se trouvent l'électrode 10 et le dispositif de détection 15, est orienté dans la direction du puits-cible, les deux puits sont - au moins pour les sections considérées - dans un même plan. Cela se traduit par le fait que le champ magnétique détecté par le dispositif 15 est orthogonal à l'axe du puits de secours. Si au contraire le puits de secours n'est pas orienté vers le puits-cible, le champ magnétique détecté dans le puits de secours est écarté de la direction orthogonale à l'axe du puits de secours. Une correction de trajectoire est alors nécessaire dans la conduite du forage du puits de secours.

Il est nécessaire que le dispositif 15 soit placé à une distance D relativement faible de l'électrode de fond 10, afin qu'il ait une bonne sensibilité aux champs induits dans les régions proches de l'électrode de fond 10. De façon appropriée, la distance D ne doit pas dépasser environ 20 mètres. Une distance D supérieure à environ 20 mètres rendrait en effet la détection problématique. De préférence, la distance D est inférieure à 10 mètres.

En ce qui concerne la fréquence d'excitation, il est approprié d'utiliser une fréquence basse, inférieure à 10 Hz. La valeur préférée est 3 Hz. Cette fréquence correspond à un minimum du spectre du champ magnétique terrestre. Elle est en même temps suffisamment élevée pour que le bruit électronique soit réduit, et le temps de mesure raisonnablement court.

Par ailleurs, il faut connaître l'orientation de l'ensemble de magnétométrie dans un référentiel terrestre. A cet effet, le dispositif 15 inclut, associé à l'ensemble de magnétométrie, un ensemble de trois magnétomètres d'axes X, Y et Z, sensibles au champ magnétique terrestre. Il faut en outre connaître, à la profondeur considérée, l'orientation du puits de secours vis-à-vis de la verticale. Cela peut être obtenu au moyen d'accéléromètres sensibles aux composantes du champ de gravité selon les axes X, Y, Z, inclus dans le dispositif 15, ou à partir des informations recueillies au cours du forage du puits de secours.

Dans la forme de réalisation illustrée à la figure 1, le dispositif 15 est relié à un équipement de surface placé dans un camion-laboratoire 20 par un câble conducteur isolé 21 et un raccord souple isolé 22 (appelé communément "bridle" par les spécialistes) comportant un conducteur central et muni en une région limitée de sa périphérie d'un conducteur relié au conducteur central et faisant office d'électrode de fond 10. Des moyens sont prévus en surface pour produire un courant alternatif à la fréquence précitée de 3 Hz. Le camion 20 comprend également les moyens nécessaires à l'acquisition des signaux produits par le dispositif 15 et acheminés par le câble 2, et à leur traitement.

La figure 2 illustre une réalisation préférée du dispositif de mesure 15. Le dispositif comprend un ensemble de magnétométrie 25, un ensemble d'inclinométrie 30 et une cartouche de télémesure 35 qui de façon en soi classique assure l'interface du dispositif avec le raccord 22 relié au câble 21.

L'ensemble de magnétométrie 25 comprend une unité de détection 26 et une unité électronique 27. L'unité de détection comporte trois sondes magnétométriques respectivement sensibles aux composantes de champ selon des axes X, Y, Z orthogonaux en un point donné. Ces sondes sont de préférence du type à discrimination de flux ("flux gate magnetometer"). L'unité électronique 27 comporte essentiellement des amplificateurs opérationnels qui se caractérisent par une bande passante devant inclure la fréquence d'excitation mais éliminer le continu, afin d'exclure l'effet du champ magnétique terrestre. Avec une fréquence d'excitation fixée comme on l'a dit à 3 Hz, une bande passante appropriée comprend les fréquences de 1 à 10 Hz.

Les amplificateurs doivent se caractériser d'autre part par un gain élevé. Ce gain peut être de l'ordre de 1000.

En ce qui concerne l'ensemble d'inclinométrie 30, destiné à fournir l'orientation et la position du dispositif 15, on peut utiliser un dispositif tel que la sonde dite GPIT, utilisée par Schlumberger. Le dispositif comprend trois magnétomètres pour la mesure des trois composantes X, Y, Z du champ magnétique terrestre (unité 31), et trois accéléromètres (unité 32) sensibles aux composantes du champ de gravité selon les trois axes X, Y, Z. Comme il est classique, un passage central 36 est prévu dans l'ensemble d'inclinométrie pour recevoir les conducteurs reliant l'ensemble de magnétométrie 25 à la cartouche de télémesure 35.

On notera que l'unité de détection 26 et l'unité 31 peuvent être réalisées de manière identique. Mais dans le premier cas, le filtrage opéré dans l'unité 27 élimine le continu, donc le champ magnétique terrestre, afin que la détection porte sur le champ induit par l'excitation électrique précitée, alors que pour l'unité 31, c'est au contraire le champ magnétique terrestre que l'on désire mesurer et donc le continu que l'on détecte.

## Revendications

1. Procédé pour localiser un puits-cible (1) muni d'un tubage métallique, dans lequel on descend dans un puits de secours (5) foré en direction du puits-cible une électrode (10) et un capteur de champ magnétique (15), et on injecte dans le sol un courant alternatif à l'aide de cette électrode, caractérisé par le fait que l'on détecte de manière prépondérante au moyen du capteur le champ magnétique créé par les lignes de courant circulant entre l'électrode (10) et le tubage du puits-cible (1).

2. Procédé selon la revendication 1, caractérisé par le fait que la distance entre le capteur de champ magnétique (15) et l'électrode (10) est inférieure à environ 20 mètres.

3. Procédé selon la revendication 2, caractérisé par le fait que la distance entre le capteur de champ magnétique (15) et l'électrode (10) est inférieure à 10 mètres.

4. Procédé selon l'une des revendications 1 à 3, caractérisé par le fait que la fréquence du courant alternatif injecté par l'électrode (10) est 3 Hz.

5. Dispositif pour la mise en oeuvre du procédé selon la revendication 1, comprenant des moyens agencés pour être descendus dans un puits de secours (5) foré en direction d'un puits-cible (1), lesdits moyens comprenant une électrode (10) pour injecter dans le sol un courant alternatif et un capteur de champ magnétique (15), caractérisé par le fait que la distance entre le capteur et l'électrode est suffisamment faible pour que dans le champ magnétique détecté par le capteur (15), la composante prépondérante soit créée par les courants circulant dans le sol à partir de l'électrode (10) en direction du tubage du puits-cible (1).

6. Dispositif selon la revendication 5, caractérisé par le fait que la distance entre le capteur de champ magnétique (15) et l'électrode (10) est inférieure à environ 20 mètres.

7. Dispositif selon la revendication 6, caractérisé par le fait que la distance entre le capteur de champ magnétique (15) et l'électrode (10) est inférieure à 10 mètres.

## Patentansprüche

1. Verfahren zum Lokalisieren eines mit einer metallischen Verrohrung versehenen Ziel-Bohrlochs (1), bei dem man in ein inRichtung des Ziel-Bohrlochs abgeteuftes Hilfsbohrloch (5) eine Elektrode (10) und einen Magnetfeldsensor (15) abläßt und mit Hilfe dieser Elektrode in das Gebirge einen Wechselstrom injiziert, dadurch gekennzeichnet, daß man mittels des Sensors in überwiegender Weise das Magnetfeld erfaßt, das von den zwischen der Elektrode (10) und und der Verrohrung des Ziel-Bohrlochs (1) zirkulierenden Stromlinien erzeugt wird.

2. Verfahren nach Anspruch 1, dadurch gekennzeichnet, daß die Distanz zwischen dem Magnetfeldsensor (15) und der Elektrode (10) kleiner ist als etwa 20 Meter.

3. Verfahren nach Anspruch 2, dadurch gekennzeichnet, daß die Distanz zwischen dem Magnetfeldsensor (15) und der Elektrode (10) kleiner ist als 10 Meter.

4. Verfahren nach einem der Ansprüche 1 bis 3, dadurch gekennzeichnet, daß daß die Frequenz des von der Elektrode (10) injizierten Wechselstroms 3 Hz beträgt.

5. Vorrichtung zum Ausführen des Verfahrens nach Anspruch 1, umfassend in ein in Richtung eines Ziel-Bohrlochs (1) abgeteuftes Hilfsbohrloch (5) herablaßbare Mittel einschließlich einer Elektrode (10) zum Injizieren eines Wechselstroms in das Gebirge sowie eines Magnetfeldsensors (15), dadurch gekennzeichnet, daß die Distanz zwischen dem Sensor und der Elektrode hinreichend klein ist, damit in dem vom Sensor (15) erfaßten Magnetfeld die überwiegende Komponente von Ström,en erzeugt wird, die von den im Gebirge zirkulierenden, von der Elektrode (10) in Richtung der Verrohrung des Ziel-Bohrlochs (1) ausgehenden Strömen erzeugt wird.

6. Vorrichtung nach Anspruch 5, dadurch gekennzeichnet, daß die Distanz zwischen dem Magnetfeldsensor (15) und der Elektrode (10) kleiner als etwa 20 Meter ist.

7. Vorrichtung nach Anspruch 6, dadurch gekennzeichnet, daß die Distanz zwischen dem Magnetfeldsensor (15) und der Elektrode (10) kleiner ist als 10 Meter.

## Claims

1. A method of locating a target well (1) lined with metal casing, wherein an electrode (10) and a magnetic field sensor (15) are lowered into a relief well (5) drilled towards the target well, and wherein an alternating current is injected into the ground by means of that electrode, characterized in that the magnetic field set up by the lines of current flowing between the electrode (10) and the casing of the target well (1) is detected preponderantly by means of the sensor.

2. A method according to claim 1, characterized in that the distance between the magnetic field sensor (15) and the electrode (10) is less than about 20 meters.

3. A method according to claim 2, characterized in that the distance between the magnetic field sensor (15) and the electrode (10) is less than 10 meters.

4. A method according to any one of claims 1 to 3, characterized in that the frequency of the alternating current injected by the electrode (10) is 3 Hz.

5. Apparatus for implementing the method of claim 1, the apparatus comprising means designed to be lowered into a relief well (5) drilled towards a target well (1), said means comprising an electrode (10) for injecting an alternating current into the ground and a magnetic field sensor (15), characterized in that the distance between the sensor and the electrode is small enough for the preponderant component of the magnetic field detected by the sensor (15) to be set up by the currents flowing in the ground from the electrode (10) and towards the casing of the target well (1).

6. Apparatus according to claim 5, characterized in that the distance between the magnetic field sensor (15) and the electrode (10) is less than about 20 meters.

7. Apparatus according to claim 6, characterized in that the distance between the magnetic field sensor (15) and the electrode (10) is less than 10 meters.
